# FASCICULE DE BREVET EUROPEEN

(11) **EP 2 300 294 B1**
(45) Date de publication et mention de la délivrance du brevet: **30.10.2019**
(21) Numéro de dépôt: 09797476.0
(22) Date de dépôt: 10.07.2009
(51) Int. Cl.: B60T 13/74

(54) **SERVOMOTEUR REGLABLE D'ASSISTANCE AU FREINAGE**
EINSTELLBARER BREMSKRAFTVERSTÄRKER
ADJUSTABLE BRAKE BOOSTER

(30) Priorité: 17.07.2008 FR 0804079
(43) Date de publication de la demande: 30.03.2011
(73) Titulaire: Robert Bosch GmbH, 70442 Stuttgart (DE)
(72) Inventeur: ANDERSON, Chris, F-75002 Paris (FR); CAGNAC, Bastien, F-60500 Chantilly (FR); SPROCQ, Raynald, F-77450 Esbly (FR)
(86) Numéro de dépôt international: PCT/EP2009/058809
(87) Numéro de publication internationale: WO 2010/006996

(56) Documents cités:
- EP-A- 0 716 969
- WO-A-03/066405
- DE-A1-102006 030 168
- FR-A- 2 860 474

## Description

La présente invention se rapporte principalement à un servomoteur réglable, notamment en ce qui concerne la valeur du saut, d'assistance au freinage.

Il est connu de réaliser des servomoteurs d'assistance de freinage exerçant une force sur une tige de poussée d'un maître cylindre qui est une fonction croissante de la force exercée par le conducteur sur une tige de commande, par l'intermédiaire d'une pédale de frein. Typiquement, pour une plage d'utilisation, le rapport d'assistance entre la force d'entrée exercée sur la tige de commande et la force de sortie du servomoteur exercée sur la tige de poussée est constante. Il est habituel d'utiliser plusieurs plages d'utilisation avec plusieurs rapports d'assistance, un premier rapport d'assistance pour le freinage de confort et un second rapport d'assistance, supérieur au dit premier rapport d'assistance pour les freinages d'urgence.

Parmi les servomoteurs d'assistance au freinage de type connu, on peut citer, de manière non limitative les servomoteurs pneumatiques d'assistance au freinage à dépression, les servomoteurs pneumatiques d'assistance de freinage pressurisés, les servomoteurs hydrauliques d'assistance au freinage (appelés hydroboost en terminologie anglo-saxonne) tels que décrits par exemple dans FR 2727370 et 494961846, les servomoteurs pneumatiques d'assistance au freinage avec découplage entre la tige de commande et la tige de poussée tel que par exemple celui décrit dans les demandes de brevet WO 2007 080106 et WO 2007080158, ainsi que des servomoteurs électriques d'assistance au freinage tel que celui décrit dans la demande de brevet française publiée sous le numéro FR-2860474. On connaît également des servomoteurs d'assistance de freinage comportant en outre des moyens de commande de freinage indépendants de la force exercée par le conducteur sur la pédale de frein couramment appelée « active booster » en terminologie anglo-saxonne. Un exemple d'un tel servomoteur pneumatique est décrit dans le brevet EP 0478 396.

Des servomoteurs d'assistance au freinage sont également décrits dans les documents DE 10 2006 030168, WO 03/066405 et EP 0 716 969.

De manière connue, le rapport d'assistance est régulé par un dispositif de réaction, notamment un disque de réaction en élastomère incompressible ou un piston de faible diamètre sur lequel s'exerce la pression d'une chambre arrière de maître cylindre.

La Demanderesse a découvert que les servomoteurs d'assistance au freinage de type connu sont pilotés en course en position relative entre un plongeur entraîné par la tige de commande et un moyen d'entraînement, typiquement un piston, de la tige de poussée exerçant un effort sur un piston primaire d'un maître cylindre.

La Demanderesse a découvert que dans le système d'art antérieur, le servomoteur assure en permanence un équilibre dynamique entre l'action et la réaction notamment au niveau de la position relative des moyens de commande, typiquement d'une valve trois voies dans le cadre d'un servomoteur pneumatique.

La Demanderesse en a conclu que l'équilibre dynamique de type connu limite les modes de fonctionnement de servomoteurs de type connu.

Le servomoteur selon la présente invention comporte des moyens permettant de créer un décalage non nul et/ou une variation, sur commande, par exemple d'un calculateur, entre la position d'équilibre des forces de réaction entre les moyens de commande, typiquement un plongeur et/ou une tige de commande et des moyens d'application d'effort du servomoteur.

Avantageusement, selon l'invention on modifie la valeur « cible » d'équilibre de fonctionnement de l'actionneur du servomoteur. On définie une valeur cible de signal délivrée par un capteur de position, par programmation du calculateur ou par choix d'un coefficient dans un programme en fonction de la ou des caractéristiques de freinage qu'on désire mettre en œuvre. Une fois la valeur de consigne déterminée, le calculateur commande l'actionneur avec une valeur de consigne pour qu'il agisse jusqu'à, en permanence, dynamiquement, atteindre la valeur cible précédemment définie et/ou sélectionnée. La consigne peut être calculée en fonction de couple, d'un effort d'une position ou autre.

L'actionneur déplace les éléments du servomoteur jusqu'à ce que le capteur émette la valeur de consigne sélectionnée).

Le servomoteur selon la présente invention, en agissant sur la valeur du signal cible de la boucle de pilotage de l'actionneur du servomoteur d'agir sur le jeu à l'équilibre, c'est-à-dire sur le saut géométrique S pour obtenir la fonction (de type assistance au freinage d'urgence, freinage à rapports d'assistance multiples, compensation de variation de masse en roulement ou autre) et/ou la caractéristique de freinage souhaitée (freinage avec « mordant », freinage doux et facile à doser ou autre) selon les conditions d'utilisation du véhicule telle que la vitesse lors du freinage, la masse totale en roulement, les conditions d'adhérence, ou du comportement du conducteur, (telles que par exemple la vitesse d'application du pied sur la pédale de frein, la force d'application, ...).

L'invention a principalement pour objet un dispositif de commande de freinage d'un véhicule automobile comportant :
- un premier équipage mobile comprenant une pièce susceptible d'être entraînée par l'organe d'actionnement du freinage par le conducteur, typiquement une pédale de frein;
- un second équipage mobile comprenant un actionneur d'assistance de freinage entraînant un élément d'application d'effort,
- un capteur de position relative desdits premier et second équipages mobiles ;
- un processeur élaborant les consignes de commande de l'actionneur d'assistance de freinage, caractérisé en ce que le processeur élabore des consignes de commande de l'actionneur de manière à générer un décalage non nul entre la position d'équilibre desdits premier et second équipages mobiles.

L'invention a également pour objet un tel dispositif caractérisé en ce que le processeur élabore des consignes de commande de l'actionneur de manière à faire varier ledit décalage entre la position d'équilibre desdits premier et second équipages mobiles.

L'invention a également pour objet un tel dispositif caractérisé en ce qu'il comporte en outre, un dispositif de réaction exerçant un effort de réaction sur ledit premier équipage mobile et en ce que la position d'équilibre à laquelle le décalage entre lesdits premier et second équipages mobiles est détectée par le capteur, est une position d'équilibre d'effort de réaction sur ledit premier équipage mobile.

L'invention a également pour objet un tel dispositif caractérisé en ce que ledit décalage augmente le saut par rapport au saut à la position sans décalage au saut correspondant de la pièce susceptible d'être entraînée par l'organe d'actionnement par le conducteur et l'élément d'application d'effort.

L'invention a également pour objet un tel dispositif caractérisé en ce que l'actionneur comporte un moteur électrique.

L'invention a également pour objet un tel dispositif caractérisé en ce qu'il comporte un piston d'assistance entraîné par la pression d'un liquide hydraulique régnant dans une chambre de poussée.

L'invention a également pour objet un tel dispositif caractérisé en ce qu'il comporte :
- un générateur de pression du liquide hydraulique, comprenant une chambre annulaire à volume variable et un piston annulaire entraîné, sur commande, par ledit moteur électrique ; et
- des moyens de connexion de la sortie de la chambre annulaire à volume variable à la chambre de poussée.

L'invention a également pour objet un tel dispositif caractérisé en ce qu'il comporte en outre des moyens, pour relier, sur commande, des moyens de génération de pression d'un liquide hydraulique à une chambre d'un maître-cylindre.

L'invention a également pour objet un tel dispositif caractérisé en ce qu'il comporte, en outre, des moyens d'isolation hermétique, sur commande, de la chambre à volume variable et de la chambre de poussée.

L'invention a également pour objet un tel dispositif caractérisé en ce qu'il comporte en outre des moyens d'isolation hermétique, sur commande, d'une chambre du maître cylindre et du réservoir de liquide de frein.

L'invention a également pour objet un tel dispositif caractérisé en ce que le processeur est susceptible d'élaborer des consignes de l'actionneur de manière à faire varier, en cours de freinage, ledit décalage entre la position d'équilibre d'effort de réaction sur ladite pièce susceptible d'être entraîné par l'organe d'actionnement et la position de l'élément d'application d'effort de l'actionneur.

L'invention a également pour objet un procédé de fabrication d'un dispositif de commande de freinage d'un véhicule automobile comportant :
- une étape de fabrication des pièces mécaniques et/ou hydrauliques dudit dispositif ;
- une étape d'assemblage des pièces fabriquées ;
caractérisé en ce qu'il comporte en outre une étape de programmation d'un processeur pour lui permettre d'élaborer des consignes de commande d'un actionneur de manière à faire varier un décalage entre une position d'équilibre d'effort de réaction sur une pièce susceptible d'être entraîné par l'organe d'actionnement par le conducteur et la position de l'élément d'application d'effort de l'actionneur.

L'invention sera mieux comprise au moyen de la description ci-après et des figures annexées données comme des exemples non limitatifs parmi lesquelles :
- la figure 1 est une vue en coupe d'un premier exemple de réalisation d'un servomoteur selon la présente invention ;
- la figure 2 est une vue schématique illustrant le principe mis en œuvre dans le dispositif selon la présente invention ;
- la figure 3 est une vue schématique en coupe de l'exemple préféré de réalisation du dispositif selon la présente invention ;
- la figure 4 est une vue schématique en coupe d'une variante de réalisation du dispositif de la figure 3 ;
- la figure 5 est une vue schématique en coupe d'un quatrième exemple de réalisation d'un servomoteur selon la présente invention ;
- la figure 6 est une vue en coupe de l'élément central d'un cinquième exemple de réalisation d'un servomoteur selon la présente invention ;
- la figure 7 et une vue en coupe d'un sixième exemple de réalisation d'un servomoteur selon l'invention ;
- la figure 8 est une vue en coupe schématique d'un septième exemple de réalisation d'un servomoteur selon l'invention ;
- la figure 9 est une vue en coupe d'un premier exemple de réalisation d'un capteur susceptible d'être mis en œuvre dans le servomoteur selon la présente invention ;
- la figure 10 est une vue en coupe d'un deuxième exemple de réalisation d'un capteur susceptible d'être mis en œuvre dans le servomoteur selon la présente invention ;
- la figure 11a est une vue en coupe d'un troisième exemple de réalisation d'un capteur susceptible d'être mis en œuvre dans un servomoteur selon la présente invention dans une première position ;
- la figure 11b est une vue analogue du capteur de la figure 11a dans une deuxième position ;
- la figure 11c est une vue analogue du capteur de la figure 11 a dans une troisième position ;
- la figure 12a est une vue schématique en coupe d'un dispositif de réaction à l'équilibre susceptible d'être mis en œuvre d'un servomoteur selon la présente invention correspondant à la position neutre du capteur tel qu'illustré sur la figure 11b ;
- la figure 12b est une représentation symbolique en traitement du signal du capteur à l'équilibre ;
- la figure 12c est une courbe représentant la pression P en sortie du maître cylindre en fonction de la force F d'entrée exercée sur la tige de commande correspondant à la position du dispositif de réaction de la figure 12a ;
- la figure 13a est une vue analogue à la figure 12a pour une position d'équilibre dynamique du détecteur illustré sur la figure 11a ;
- la figure 13b est une vue analogue à la figure 12b pour la position du dispositif de réaction illustré sur la figure 13a ;
- la figure 13c est une vue analogue la figure 12c pour une position du dispositif de réaction illustrée sur la figure 13a ;
- la figure 14a est une vue analogue à la figure 12a pour une position d'équilibre dynamique du capteur correspondant à celle illustrée sur la figure 11c ;
- la figure 14b est une figure analogue à la figure 12b mais correspondant à la position du dispositif de réaction illustré sur la figure 14a ;
- la figure 14c est une vue analogue la figure 12c mais correspondant à la position du dispositif de réaction illustré sur la figure 14a ;
- la figure 15 est un ensemble de courbes de la pression P en sortie du maître cylindre en fonction de la force F exercée sur la tige de commande pour diverses positions d'équilibre dynamiques correspondant à diverses positions relatives précitées ;
- la figure 16 est un ensemble de courbes illustrant la décélération y du véhicule freiné, équipé d'un servomoteur selon la présente invention, en fonction de la force F exercée sur la tige de commande correspondant aux conditions illustrées sur la figure 15
- la figure 17 est un ensemble de courbes illustrant les diverses possibilités de comportements du système selon la présente invention en fonction d'une variable telle que la pression de sortie du maître cylindre la force appliquée sur une pédale de frein, la décélération du véhicule ou la charge transportée ;
- la courbe 18 est un ensemble de courbes analogues à la figure 17 illustrant la possibilité d'évolution des équilibres en cours d'un même freinage pour obtenir des caractéristiques de freinage inédites ;
- la figure 19 est une vue en coupe schématique d'un huitième exemple de réalisation d'un servomoteur selon la présente invention ;
- la figure 20 est une vue en coupe schématique d'un neuvième exemple de réalisation d'un servomoteur selon la présente invention.

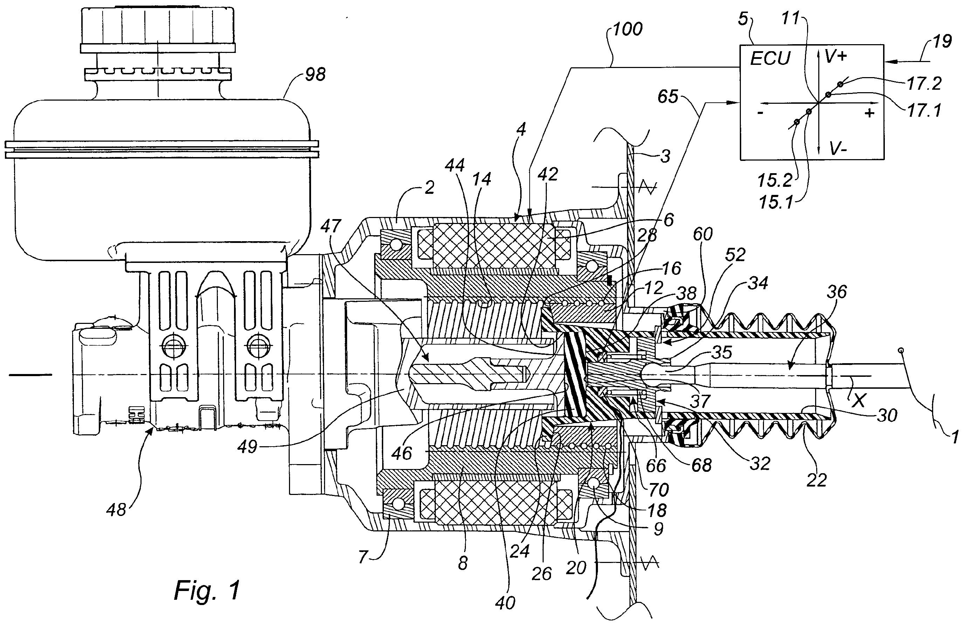

Sur les figures 1 à 20 on a utilisé les mêmes références pour désigner les mêmes éléments.

Sur la figure 1, on peut voir un premier mode de réalisation selon la présente invention comportant une enveloppe 2, un moteur électrique rotatif 4 d'axe X disposé à l'intérieur de l'enveloppe qui permet d'entraîner un bague 12. Dans l'exemple représenté, le moteur est formé par un élément électrique immobile appelé stator solidaire de l'enveloppe 2 et un élément électrique mobile en rotation appelé rotor 8 à l'intérieur du stator. Le stator est alimenté électriquement par exemple par un alternateur (non représentée).

Le servomoteur est fixé à un tablier 3 de séparation d'un compartiment moteur de l'habitacle du véhicule automobile.

La structure interne du moteur électrique rotatif étant bien connue de l'homme du métier, celle-ci ne sera pas décrite davantage.

Le rotor 8 forme un écrou d'un ensemble vis écrou, avantageusement à billes disposé à l'intérieur de l'enveloppe. Le rotor est immobilisé en translation et est apte à tourner autour de l'axe longitudinal X, le rotor est maintenu dans l'enveloppe du servomoteur aux moyens d'un premier et d'un deuxième jeux de roulement à billes, 7 et 9.

L'ensemble vis écrou 10 comporte également une vis formée par la bague annulaire 12 maintenue immobile en rotation par rapport à l'enveloppe du servomoteur et apte à se déplacer en translation par rapport au rotor 8.

La rotation du rotor 8 entraîne en translation, la bague 12 par l'intermédiaire d'un premier filetage 14 porté par la paroi intérieure du rotor, la bague annulaire quant à elle est munie sur sa surface extérieure d'un deuxième filetage 16 apte à coopérer avec le premier filetage 14. De manière avantageuse, des billes 18 sont interposées entre la paroi extérieure de la bague 12 et la paroi intérieure du manchon cylindrique formant rotor.

Le servomoteur selon la présente invention comporte également un piston d'assistance 20 d'axe X monté dans la bague 12. Le piston d'assistance comporte à une première extrémité arrière une queue de piston 22 et à une deuxième extrémité avant une embase 24 en appui par une face arrière 26 contre une face avant 28 transversale de la bague annulaire 12. Le piston d'assistance 20 est traversé par un passage 30 longitudinal, dans lequel est monté à coulissement un plongeur 32.

Le plongeur 32 reçoit à une première extrémité arrière 34 une première extrémité avant 35 d'une tige de commande 36 et est apte à venir en contact par une deuxième extrémité avant avec une première face 38 d'un disque de réaction 40 en matériau élastiquement déformable et incompressible tel qu'un élastomère. La deuxième extrémité avant du plongeur 37 est également appelée palpeur.

La tige de commande 36 est reliée par une deuxième extrémité longitudinale arrière à une pédale de frein, susceptible d'être déplacée par un conducteur automobile.

Le disque de réaction 40 est disposé dans un logement 42 pratiqué dans la face avant du piston d'assistance de manière à venir en appui par une première face 38 contre le piston d'assistance par une partie radialement externe. Le disque de réaction est en appui par une deuxième face 44 contre une première extrémité arrière 46 d'une tige de poussée 47, destinée à transmettre l'effort du conducteur et l'effort d'assistance du servomoteur à un piston 49 de maître cylindre 48 par une deuxième extrémité avant 50.

Au repos, un jeu est prévu entre le palpeur 37 et une partie centrale de la face arrière du disque de réaction fixant la hauteur de saut du servomoteur.

Selon l'invention, comme il sera expliqué ci-après, le saut peut être réglé dynamiquement par l'actionnement, sur commande, du moteur 4. Ainsi, la position d'un premier équipage mobile lié à la pédale de frein 1, typiquement au plongeur 37 et/ou à la tige de commande 36, par rapport au second équipage mobile lié au piston du maître cylindre 48, typiquement par rapport à la tige de poussée, relative au piston d'entraînement au disque de réaction 40, est réglée, dynamiquement, en permanence, aussi bien au repos que, si cela est désiré, lors d'un freinage, par l'action du moteur 4. Le jeu ou distance appelé saut géométrique S dans la suite de ce brevet, entre le palpeur 37 et une partie centrale de la face arrière du disque de réaction 40 peut être maintenu fixe pour un véhicule ou un modèle de véhicule, ou elle peut varier d'un freinage à un autre pour un même véhicule ou même en cours d'un même freinage selon les caractéristiques du freinage désiré.

Le servomoteur comporte également un moyen de fixation du plongeur par rapport au piston d'assistance, ces moyens 52 sont formés par une clé sensiblement perpendiculaire à l'axe X et montée fixe sur l'extrémité arrière 34 du plongeur et traversant avec jeu dans une lumière transversale pratiquée dans la queue de piston 22.

Au repos, les extrémités transversales 58' de la clé viennent en butée contre l'enveloppe du servomoteur dans le mode de réalisation représenté, l'extrémité arrière de l'enveloppe comporte un épaulement 60 formant appui pour une rondelle annulaire qui forme butée pour la clé 54.

Des moyens d'étanchéité sont avantageusement prévus entre l'enveloppe et la surface extérieure de la queue de piston et entre reliant l'enveloppe et la tige de commande de manière à éviter l'entrée de particules étrangères susceptibles de perturber le bon fonctionnement du servomoteur selon la présente invention.

Selon la présente invention, le servomoteur comporte également des moyens 66 pour détecter le déplacement relatif du piston d'assistance et du plongeur, cette détection permettant de commander par l'intermédiaire d'un calculateur l'actionnement du moteur électrique, et par la même le déplacement du piston d'assistance.

Les moyens 66 sont reliés électriquement à un calculateur (ECU en terminologie anglo-saxonne) par un connecteur 65.

Le moteur 4 reçoit le signal de commande du calculateur par la liaison 100.

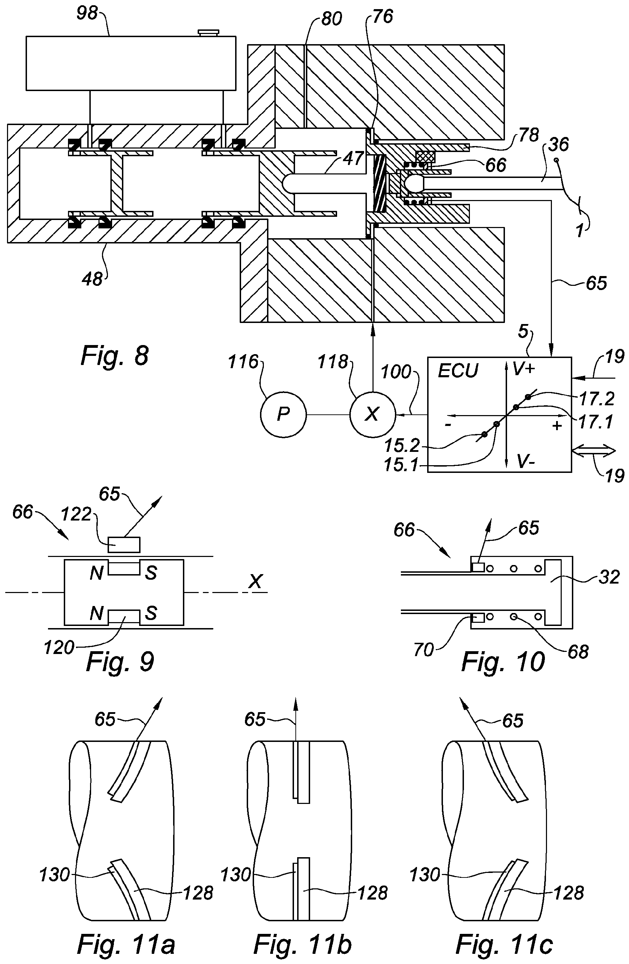

Selon le premier exemple de réalisation représenté en figures 1 et 10, les moyens 66 de détection du déplacement relatif du piston d'assistance du plongeur comportent un moyen élastique interposé entre le plongeur et le piston d'assistance et un capteur d'effort 70, le moyen élastique 68 est en appui par une première extrémité contre le plongeur et par une deuxième extrémité contre le capteur 70. Dans l'exemple représenté, la première extrémité du moyen élastique 68 est en appui contre un fond d'une gorge annulaire axiale du plongeur. Le capteur d'effort 70 est quant à lui dans l'exemple représenté de forme sensiblement annulaire, solidaire du piston d'assistance et entourant l'extrémité avant du plongeur.

En position repos, le moyen élastique, qui est dans l'exemple représenté formé par ressort cylindrique, est précontraint. Ainsi le capteur d'efforts détecte au repos un effort appliqué par le ressort cylindrique, cette valeur d'efforts au repos forme pour le calculateur une valeur de référence V représentée au point 11.

De manière avantageuse, le pas de vis de l'ensemble vis écrou est réversible, ainsi, le retour du piston d'assistance en position repos est obtenu sans activation du moteur électrique.

Un pas de vis « réversible » est entendu dans la présente demande comme un pas de vis permettant le retour de la vis en position de repos sous les seules actions de la pression contenue dans le maître-cylindre et des ressort de rappel des pistons de maître-cylindre. Il n'est pas nécessaire de faire tourner le rotor dans le sens inverse du sens déplaçant la bague en direction du maître-cylindre, dit sens de montée en pression. Un pas de vis irréversible est entendu dans la présente demande comme nécessitant une rotation du rotor dans le sens inverse du sens de montée en pression pour ramener la bague annulaire en position de repos.

Il est bien entendu que la mise en œuvre d'un moyen élastique autre qu'un ressort à spirale ne sort pas du cadre de la présente invention.

Contrairement au dispositif décrit dans FR 2860 474, le calculateur 5 n'est pas limité à un asservissement tendant à servir, en boucle fermée, la valeur du signal délivré par le connecteur 65 par les moyens de détection 66 à une valeur V au repos au point 11 (typiquement V au repos est nul). Au contraire, le calculateur 5 peut, si cela est nécessaire ou utile, maintenir, avantageusement en boucle fermée, un asservissement du moteur 4 de manière à ce que le signal, typiquement la tension, délivrée par les moyens 66 de détection soit un signal négatif 15.1, 15.2, ... correspondant par exemple à une augmentation du saut ou, au contraire asservie à des valeurs de tension positif tel que 17.1 ou 17.2. Cet asservissement peut s'effectuer par déroulement autonome des programmes du calculateur 5 ou, au contraire, l'exécution d'un programme en réponse à une commande 19 reçue par le calculateur 5, par exemple par l'intermédiaire d'un bus tel que le bus CAN couramment utilisé dans l'industrie automobile. Une commande de l'interface utilisateur de véhicule, tel qu'un bouton poussoir, une manette de commande ou une entrée à sélectionneur dans un menu de configuration de véhicule permettant au conducteur de sélectionner le comportement du système de freinage désiré peut également être reliée à un dispositif d'entrée, relié directement ou non, par exemple au 19 au calculateur 5.

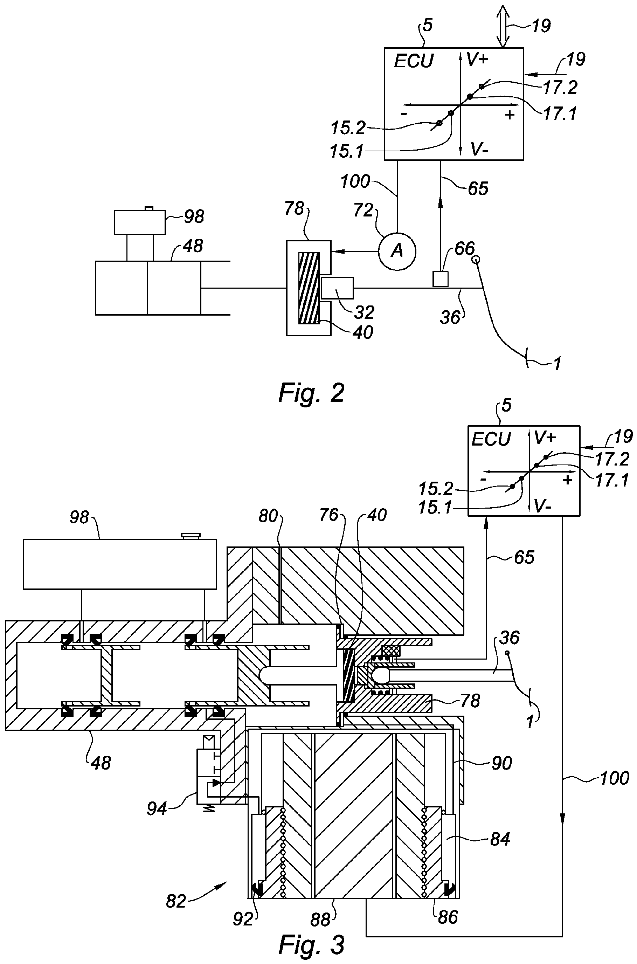

Comme illustré sur la figure 2, il est bien entendu que la présente invention n'est pas limitée à des servomoteurs électriques d'assistance de freinage, mais à tout servomoteur comportant un actionneur 72 commandé par un dispositif de commande avantageusement un calculateur 5, un dispositif de réaction, typiquement un disque 40, des moyens 66 de détection de position, ou de variation de position de l'équipage mobile lié à la pédale de frein et un moyen de génération de pression, avantageusement un maître cylindre 48.

Sur la figure 3, on peut voir un exemple de réalisation d'un servomoteur selon la présente invention comportant un maître cylindre tandem 48 équipé, en outre d'une chambre de poussée 76 recevant, sur commande, avantageusement d'un calculateur 5, un fluide, typiquement du liquide de frein sous pression.

Avantageusement, la surface efficace de la chambre de poussée 76 est adaptée à la surface efficace du piston primaire et/ou secondaire du maître cylindre 48.

Par exemple, on augmente la surface efficace de la chambre de poussée 76 par rapport à celle des chambres du maître-cylindre si on veut compenser une pression faible (par exemple limitée à 10⁷ Pa) de la source de liquide de frein sous pression. Toutefois, un tel rapport de surfaces risque d'induire un mouvement de la pédale de frein 1 lors de modes actifs.

Pour lesdites surfaces égales, la pression de saturation, c'est-à-dire la pression maximale fournie par la source haute pression est égale à la pression générée par l'assistance en sortie du maître-cylindre. La pédale 1 reste immobile pendant les modes actifs.

Pour des surfaces efficaces de la chambre de poussée 76 inférieures à celles des pistons du maître-cylindre on diminue le volume de fluide à fournir à la chambre 76 pour un freinage donné, ce qui permet de limiter le débit de la pompe, de diminuer le volume de l'accumulateur et/ou d'améliorer la dynamique du freinage c'est-à-dire de diminuer le temps de réponse du système de freinage.

Dans l'exemple avantageusement illustré, le servomoteur selon la présente invention comporte un piston hydraulique 78 dont la face arrière délimite la chambre de poussée 76 et dont la face avant est disposée dans un alésage rempli et avec un fluide compressible typiquement de l'air avantageusement mis à l'atmosphère par une canalisation 80. Dans l'exemple préféré illustré, un évidement du piston hydraulique 78 reçoit le disque de réaction 40 sur la face avant duquel s'appuie une tige de poussée 47. La face arrière du logement de réception du disque de réaction 40 comporte un épaulement assurant la poussée de la section correspondante du disque de réaction par le piston hydraulique 78 et une ouverture centrale de réception de la partie antérieure du plongeur 37, le rapport de surface entre ledit épaulement et ladite ouverture détermine le rapport d'assistance par défaut, au point 11, du servomoteur.

Dans l'exemple avantageux illustré, les moyens de génération de pression d'alimentation de la chambre de poussée 76 comportent un maître cylindre 82 comportant une chambre 84 à volume variable dans laquelle la pression du liquide de frein est augmentée par un piston 86 entraîné, sur commande 100 par un moteur 88, avantageusement un moteur électrique.

Dans l'exemple avantageux illustré, la chambre 84 est une chambre annulaire reliée par une canalisation 90 à la chambre de poussée 76. Avantageusement, le moteur est un moteur pas à pas et entraîne le piston 86 par l'intermédiaire d'une vis à billes.

Dans l'exemple avantageux illustré, le piston 86 comporte à au moins une de ses extrémités axiales, un joint hydraulique susceptible de supporter les pressions de commande de préférence comme illustré, un joint de type coupelle.

Avantageusement, le servomoteur selon la présente invention comporte en outre, une électrovalve 94 assurant la fermeture hermétique, sur commande, d'une canalisation 96 reliant la chambre 84 au maître cylindre 48. Dans l'exemple avantageux illustré, la canalisation 96 débouche du côté du maître cylindre 48 entre deux coupelles délimitant, de manière connue, une chambre de réalimentation du maître cylindre. Cette chambre est d'autre part reliée à un réservoir 98 de liquide de frein. En outre, au repos, la chambre de réalimentation est reliée par des ouvertures pratiquées dans le piston primaire à la chambre primaire du maître cylindre 48. Au contraire, lorsque le piston primaire avance, les ouvertures passent au-delà de la coupelle antérieure permettant la montée en pression du circuit de freinage. L'électrovalve 94 permet en cas de panne du moteur 88 en cours de freinage de relâcher la pression de la chambre 84 dans le réservoir 98 et ainsi d'éviter dans l'éventualité d'une panne du moteur 88, un freinage non désiré. De même, il est à noter qu'en absence d'assistance suite à une panne du moteur 88, une poussée sur la tige de commande entraîne directement la tige de poussée 47 sans avoir à entraîner le moteur 88.

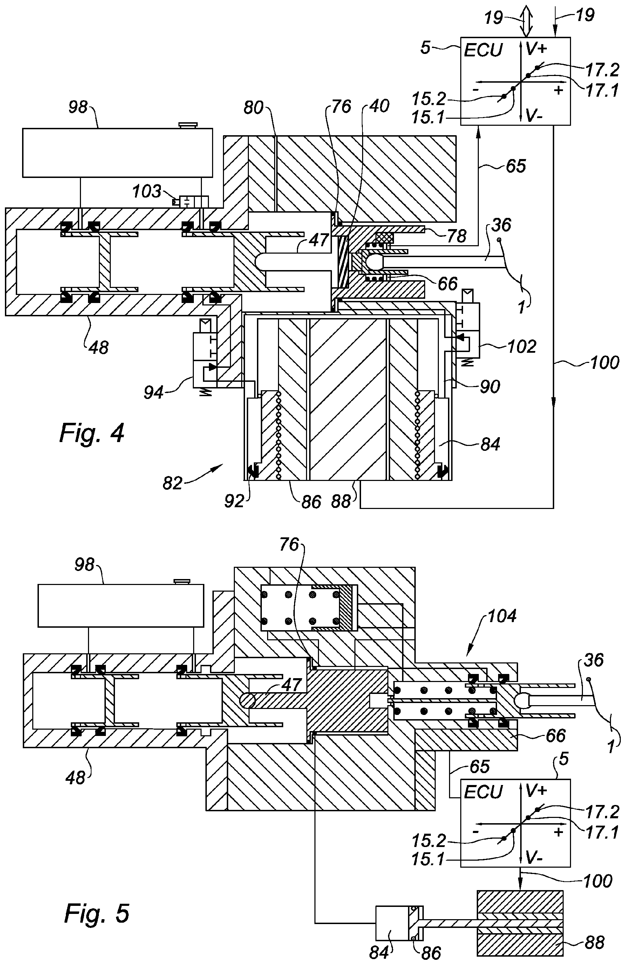

Sur la figure 4, on peut voir l'exemple préféré de réalisation du servomoteur selon la présente invention, qui, outre les éléments du servomoteur de la figure 3 comporte une seconde électrovalve 102 isolant, sur commande la chambre de poussée 76 de la chambre 84 du maître cylindre 82. Ainsi, il est possible de maintenir une pression hydraulique de freinage constante indépendamment de l'action du moteur. Cela peut être utile, par exemple pour des pressions constantes sur la pédale de frein, par exemple lors d'un arrêt à un feu rouge, d'un arrêt prolongé ou d'une descente sur une route en pente avec freinage constant. Ainsi, il n'est pas utile dans un tel cas d'actionner le moteur 88. On diminue ainsi la consommation électrique ainsi que l'usure du moteur. La seconde électrovalve 102 est particulièrement utile dans le cas de mise en œuvre de vis réversibles, c'est-à-dire des vis susceptibles d'être entraînées en rotation par une variation de pression dans la chambre moteur 76.

Avantageusement, le servomoteur selon la présente invention comporte en outre une troisième électrovalve 103 isolant, sur commande, la chambre primaire du maître cylindre 48 du réservoir de liquide de frein 98. Il est ainsi possible d'assurer le préremplissage du circuit de freinage à travers le maître cylindre en ouvrant l'électrovalve 94 en fermant la valve 103 de manière à éviter que la pression fournie à la chambre primaire s'échappe vers le réservoir. Il est à noter que le préremplissage des freins s'effectue sans avancement de la tige de commande 36, par suite de la pédale de frein 1. De même, la combinaison des électrovalves 94 ouverte et électrovalve 103 fermée, permet de mettre en œuvre des modes de freinage actifs c'est-à-dire sur commande du calculateur 5, sans nécessité de l'action du conducteur et, sans déplacement de la pédale 1. Il est à noter que le piston secondaire transmet à la chambre secondaire la pression régnant dans la chambre primaire, notamment lors des freinages actifs.

Le préremplissage de frein peut être très utile pour diminuer les distances de freinage et/ou pour permettre la mise en œuvre de frein hydraulique à recul de piston augmenté qui présente un couple de freinage résiduel (non désiré) nul et/ou tout au moins réduit.

En outre l'électrovalve 103 ou tout autre moyen d'isolation hermétique, sur commande, peut être actionnée pour isoler au moins une des chambres du maître cylindre 48, typiquement la chambre primaire de manière à, par exemple, réduire la course morte au moment de l'actionnement des freins, et de préférence avant que les trous de réalimentation du piston primaire aient dépassé la coupelle avant de la chambre primaire du maître cylindre ou, si une température anormalement élevée a été détectée lors d'un freinage risquant d'entraîner en cas de relâchement du freinage, l'ébullition du liquide de frein. Toutefois, lors du défreinage complet, c'est-à-dire sans appui sur la pédale de frein, éventuellement après une temporisation, l'électrovalve 103 est réouverte de manière à éviter un freinage non désiré.

Il est bien entendu que, comme illustré sur la figure 5, la mise en œuvre d'un simulateur de sensation pédale 104 associé à des moyens de détection de position 66 d'un calculateur 5 assurant la commande des moyens de freinage actif ne sorte pas de la présente invention.

Dans l'exemple illustré sur la figure 5, le simulateur comporte deux chambres hydrauliques reliées par des canalisations, les dispositifs d'assistance et de freinage étant analogues à ceux de la figure 3. En variante, le moteur électrique 88 assure, sur commande l'avance d'un piston 86 d'un maître cylindre non nécessairement annulaire d'alimentation en liquide de frein sous pression d'une chambre de poussée 76.

La mise en œuvre d'un simulateur permet au prix d'une augmentation de la complexité du système et de son prix de revient, de découpler complètement la consigne de commande générée au niveau du simulateur de la pression effectivement générée dans le frein. Ceci peut être extrêmement utile dans le cas d'une coopération de plusieurs systèmes de freinage comme par exemple le système de freinage régénératif de véhicules hybrides comportant non seulement un moteur thermique mais également un moteur électrique susceptibles lors de freinage, de se comporter comme un générateur de récupération d'énergie.

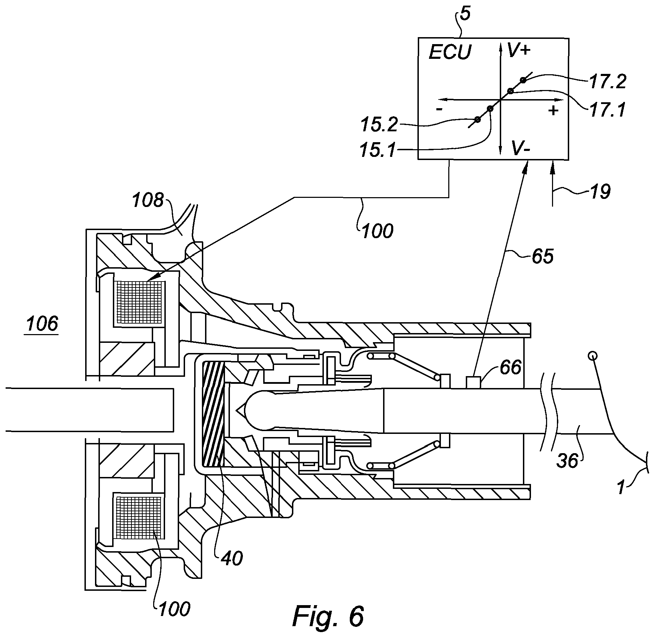

Sur la figure 6, on peut voir la partie centrale d'un servomoteur pneumatique à dépression d'assistance au freinage selon la présente invention. Le servomoteur pneumatique de la figure 6, comporte, disposée dans une enveloppe non représentée, une chambre avant 106 reliée au vide et une chambre arrière 108 susceptible d'être reliée, sur commande d'une valve trois voies, à la pression atmosphérique. La valve trois voies peut être commandée, non seulement par la tige de commande 36 mais également par un actionneur 110 recevant un signal de commande 100 du calculateur 5.

Avantageusement, l'actionneur est un électroaimant.

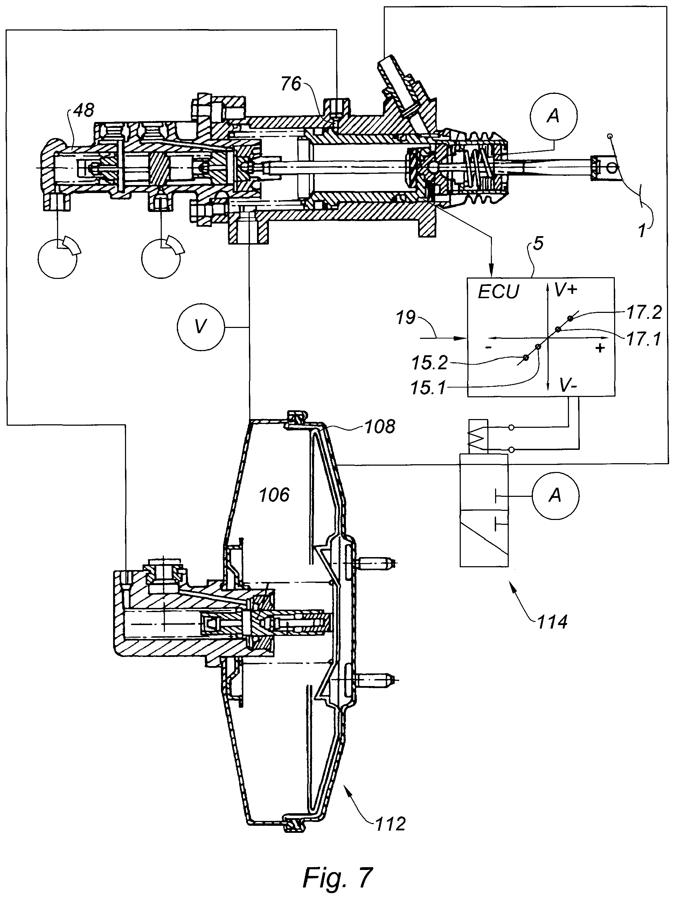

Sur la figure 7, on peut voir un exemple de réalisation d'un servomoteur hydraulique selon la présente invention comportant une chambre de poussée hydraulique 76 alimentée en fluide sous pression par un servomoteur pneumatique à dépression dont le remplissage de la chambre arrière 108 est assuré par une électrovalve 114 commandée par le calculateur 5.

Sur la figure 8, on peut voir un exemple de réalisation d'un servomoteur selon la présente invention comportant une chambre de poussée 76 alimentée, sur commande du calculateur 5 par une pompe 116 avantageusement par l'intermédiaire d'un circuit hydraulique 118 comportant par exemple une valve et un accumulateur. On peut utiliser une pompe 116 dédiée, avantageusement électrique ou au contraire, utiliser une pompe déjà présente dans le véhicule automobile telle qu'une pompe d'un dispositif hydraulique d'assistance de direction ou une pompe d'un dispositif de contrôle de trajectoire appelé ESP en terminologie anglo-saxonne.

Sur la figure 9, on peut voir un premier exemple de réalisation des moyens 66 de détection de position relative de l'équipage mobile comportant la pédale de frein 1 par rapport à un deuxième équipage mobile lié au piston du maître cylindre dans l'exemple de la figure 9, le premier équipage mobile est muni d'un aimant 120 disposé en vis-à-vis d'un détecteur 122 de champ magnétique par exemple un détecteur à effet Hall. Avantageusement, l'aimant 120 est un aimant annulaire et le détecteur 122 est un détecteur proportionnel. Le déplacement axial selon l'axe X assure la variation du champ magnétique au niveau du détecteur 122 et par suite de la tension 65 délivrée par ce détecteur. Avantageusement, la disposition de pôles nord et sud de l'aimant 120 est disposée axialement selon l'axe X.

Sur la figure 10, on peut voir à plus grande échelle le détecteur mis en œuvre dans le dispositif de la figure 1 et comportant un capteur d'effort 70 comprimé par un ressort hélicoïdal 68. Avantageusement, le ressort a une raideur k constante de manière à ce que la force F exercée par ce ressort sur le capteur soit proportionnelle au déplacement du plongeur 32 dont un épaulement assure la compression du ressort.

Sur les figures 11a, 11b et 11c, on peut voir l'exemple préféré de réalisation des moyens 66 de détection comportant une rondelle élastique 128 portant sur sa surface une ou plusieurs jauges de contrainte par exemple circonférentielles et/ou radiales 130. La rondelle 128 comporte des moyens d'ancrage sur un premier équipage mobile et des moyens d'entraînement liés au second équipage mobile. Avantageusement, la rondelle 128 comporte des moyens périphériques d'encrage sur l'équipage mobile entraîné par l'actionneur du servomoteur selon la présente invention. Typiquement, la périphérie de la rondelle 128 est encrée dans un alésage du piston. Les moyens d'entraînement du bord radialement interne de la rondelle 128 sont avantageusement portés par le plongeur 32. Ainsi, les moyens 66 de la figure 11 permettent de détecter le mouvement relatif du premier équipage mobile lié à la pédale de frein par rapport au second équipage mobile entraîné par l'actionneur.

Sur la figure 11a la rondelle est illustrée déformée vers l'avant c'est-à-dire que le plongeur présente une avance sur le piston. En d'autres mots, la valeur du saut a été réduite dans la position illustrée sur la figure 11a, ce qui correspond au point 17i, (17.1, 17.2,...) la tension V délivrée par la jauge de contrainte étant positive.

Sur la figure 11b, la rondelle 128 n'est pas déformée ce qui correspond au point 11, le saut étant à sa valeur nominale, la tension V étant nulle. Il est à noter que c'est la seule position accessible lors du fonctionnement du moteur 4 du servomoteur décrit dans le brevet FR 2860474.

Sur la figure 11c, la rondelle est déformée vers l'arrière, la jauge de contrainte 130 délivrant un signal 65 ayant une tension négative correspondant au point 15.i, (15.1, 15.2, ...) avec avance du piston sur le plongeur et augmentation du saut.

Il est bien entendu qu'une inversion de la polarité de la jauge de contrainte 130 ou un changement de l'origine ne sort pas du cadre de la présente invention.

De même, la mise en œuvre de capteur intelligent, de capteur délivrant une valeur numérique, une largeur d'impulsion (PWM) ou autre ne sort pas du cadre de la présente invention.

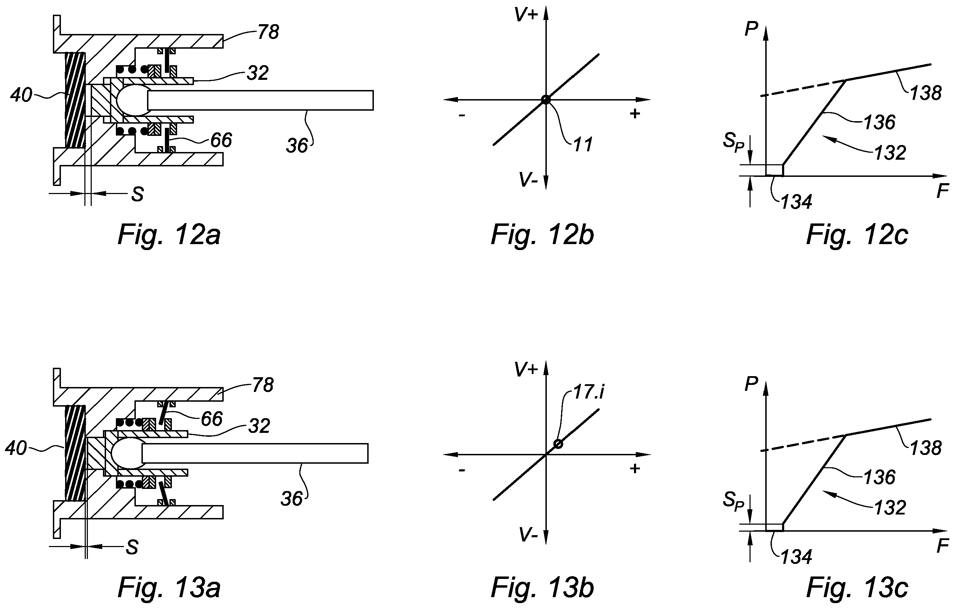

Sur la figure 12a, on peut voir le module de commande d'un servomoteur selon la présente invention dans une position neutre dans laquelle le saut géométrique S, c'est-à-dire la distance entre la face antérieure du palpeur 32 et la face arrière du disque de réaction mesurée selon l'axe X est déterminée par la géométrie des pièces utilisées. Il s'agit d'une position neutre dans laquelle la rondelle 128 se trouve dans la position illustrée sur la figure 11b.

Sur la figure 12b, on a illustré la position du signal de commande 100 délivré par le calculateur à l'actionneur au point 11. Cette représentation symbolique indique que d'une part la rondelle 128 n'est pas déformée et que par conséquent la jauge de contrainte 130 délivre un signal nul même lors du pilotage du piston par l'actuateur. Sur la figure 12c, on peut voir une courbe 132 illustrant la pression P en sortie du maître cylindre en fonction de la force F exercée par le conducteur sur la tige de commande 36 d'un servomoteur selon la présente invention, dont l'équilibre assuré par l'actuateur correspond à la position illustrée sur la figure 12a.

Un premier tronçon 134 à pression nulle correspond à l'effort d'attaque.

Un deuxième tronçon Sp sensiblement vertical correspond à une montée en pression à force constante en début de freinage. Le saut en pression Sp est raccordé à un tronçon rectiligne incliné dont la pente correspond au rapport d'assistance du servomoteur. Le tronçon 136 est raccordé à un tronçon 138 de pente plus faible correspondant à la saturation du servomoteur c'est-à-dire que le servomoteur apporte la force maximale dont il est capable, l'augmentation de la pression ne résultant que de l'augmentation de la force exercée, par l'intermédiaire de la pédale de frein sur la tige de commande 36.

Sur la figure 13a, on peut voir le dispositif de la figure 12a dans lequel le premier équipage mobile comportant le plongeur 37 est avancé par rapport au piston. Il en résulte que, d'une part, la rondelle 128 est déformée de manière analogue à celle illustrée sur la figure 11a et que d'autre part, la valeur géométrique du saut S est réduite par rapport à la valeur du saut S du dispositif maintenu en équilibre sur la figure 12a. Ce fait est symbolisé sur la figure 13b que la jauge de contrainte 130 délivre une tension positive V+ correspondant à la flexion de la rondelle 128. Il est à noter que selon le type de freinage désiré, l'actuateur 72, typiquement le moteur électrique 4 peut maintenir la position de la figure 13a constante ou au contraire faire varier le décalage en position des deux équipages mobiles et par suite le sens et l'amplitude de la déformation de la rondelle 128.

Sur la figure 13c, on peut voir que le saut en pression Sp a diminué sur la courbe 132 modifiant le comportement du véhicule au freinage.

La configuration de la figure 13 peut par exemple permettre de réduire le mordant du freinage aussi bien en utilisation normale que par exemple lorsque le véhicule transporte une faible masse ou si une personne désire un freinage à commande fine ou à un freinage automatique sans à-coups et/ou doux par exemple lors de l'actionnement d'un frein de parking automatique.

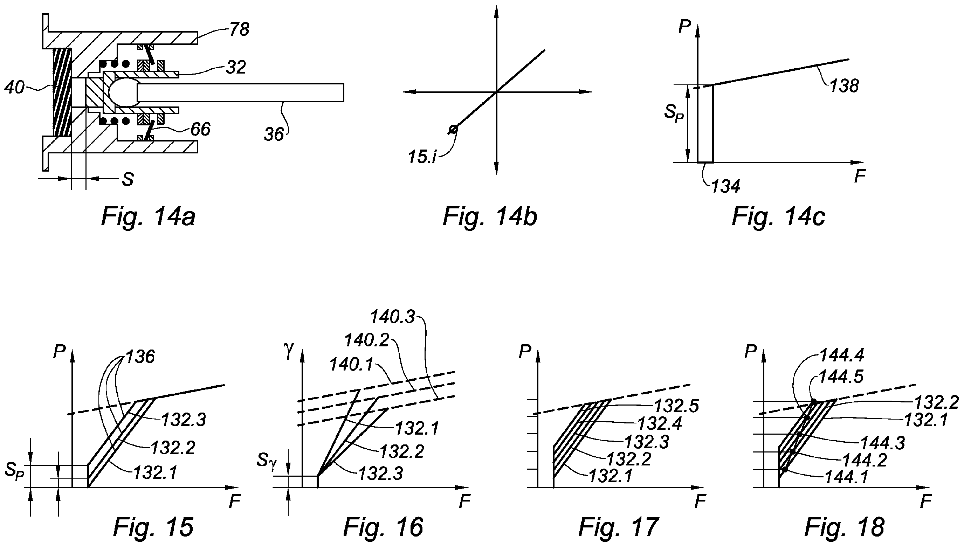

Sur la figure 14a, on a illustré le dispositif de la figure 12a avec une rondelle 128 déformée vers l'arrière illustré sur la figure 11c dans la mesure où le second équipage mobile entraîné par l'actuateur 72, typiquement le moteur 4 est en avance par rapport au premier équipage mobile comportant le plongeur 37.

Il en résulte une augmentation du saut en pression Sp dont l'exemple extrême illustré sur la figure 14c correspond à une verticale Sp reliant directement une pression nulle à une pression de saturation, sans segment incliné 136. Sur la figure 14b, la valeur du signal est illustrée au point 15.i.

Ce type de comportement peut s'avérer particulièrement utile dans le cas d'un freinage d'urgence ou d'un freinage rapide facilitant à un conducteur même timoré, n'osant pas appuyer très fort sur la pédale ou ayant une force musculaire faible d'obtenir une distance d'arrêt courte et/ou une décélération importante. Ainsi, un pilotage de l'actuateur 72, typiquement du moteur 4 permet d'obtenir une fonction d'assistance au freinage d'urgence (brake assist en terminologie anglo-saxonne).

Sur la figure 15, on peut voir les trois courbes de la pression P disponibles en sortie du maître cylindre en fonction de la force F appliquée par le conducteur pour une utilisation possible du servomoteur selon la présente invention avec, par exemple une commande incluant une compensation 100, émise par le calculateur 5, de la charge du véhicule. La courbe 132.1 correspond à un saut nul ou négligeable correspondant à une position s'étendant légèrement au-delà de celle illustrée sur la figure 13a. La courbe 132.1 correspond par exemple au comportement désiré, et obtenu par le servomoteur selon la présente invention, pour un véhicule avec une charge inférieure à la charge normale habituelle du véhicule, par exemple un cas où la charge du véhicule est principalement constituée par le conducteur lui-même. La courbe 132.2 correspond à la position neutre illustrée sur la figure 12a. La courbe 132.2 correspond à un véhicule normalement chargé. La courbe 132.3 représente le cas d'un saut augmenté (mais moins que le saut illustré sur la figure 14a). La courbe **132.3** correspond à un véhicule transportant une charge supérieure à la charge normale. La charge transportée par le véhicule, ou plus précisément la masse en mouvement est déterminée de manière connue, par exemple par un système de stabilisation de véhicule, appelé ESP dans la technique et/ou un accéléromètre.

Ainsi, les trois courbes comportent des segments 136 parallèles entre eux et dont la pente correspond au rapport d'assistance. Il est intéressant de comparer ces courbes avec les faisceaux de courbes 138.1, 138.2 et 138.3 de la figure 16 qui illustre la décélération y en fonction de la force F. La courbe 138.1 de la figure 16 correspond au cas de la courbe 132.1 de la figure 15. La courbe 138.2 de la figure 16 correspond à la courbe 132.2 de la figure 15. La courbe 138.3 de la figure 16 correspond à la courbe 132.3 de la figure 15. On constate tout d'abord qu'il est avantageux d'obtenir un saut en décélération Sy qui est constant pour les trois courbes 138.

En d'autres termes, la décélération en fin du saut y est la même pour les trois courbes. Par contre, après les sauts, les pentes des courbes 138.1, 138.2 et 138.3 vont croissantes pour intercepter respectivement des courbes de saturation 140.1, 140.2 et 140.3 parallèles entre elles. La courbe 140.3 se trouve au dessus de la courbe 140.2 elle-même se trouvant au dessus de la courbe 140.1. Il est à noter que les courbes de saturation en décélération tiennent compte de la force totale exercée aussi bien par les servomoteurs d'assistance de freinage que par le conducteur. On voit mieux sur la figure 16 que le comportement et le ressenti du freinage sont complètement différents selon les positions relatives des deux équipages mobiles. Notamment, par un saut en pression inférieure (courbe 132.1) on peut amener le conducteur à une courbe de saturation supérieure (140.1) et par suite à une plus courte distance d'arrêt, et/où a une distance d'arrêt sensiblement constante même pour une charge transportée, c'est-à-dire une masse en mouvement, supérieure.

Sur la figure 17, on a illustré un faisceau de courbes pression P en fonction de la force F pour divers réglages du saut du système selon la présente invention allant par exemple d'une courbe 132.1 optimisant un freinage pour une pression hydraulique de 2 10⁶ Pa, une courbe 132.2 optimisant un freinage pour une pression hydraulique de 4 10⁶ Pa, une courbe 132.3 optimisant un freinage pour une pression hydraulique de 4 10⁶ Pa, une courbe 132.4 optimisant un freinage pour une pression hydraulique de 8 10⁶ Pa, pour aboutir à une courbe 132.5 correspondant par exemple à 10⁷ Pa. De plus, comme illustré sur la figure 18, les modifications du décalage entre les équipages mobiles peuvent évoluer au cours d'un même freinage au fur et à mesure que le conducteur appuie de plus en plus fort sur le frein et ou en fonction de la pression P et/ou de la décélération y. On peut par exemple passer de la courbe 132.1 à la courbe 132.2, 132.3, 132.4 vers la courbe 132.5 au moment de la saturation. Sur la figure 18, les points correspondant au couple de valeur (F, P) pour les pressions de 2 10⁶ Pa, 4 10⁶ Pa, 6 10⁶ Pa, 8 10⁶ Pa et 10⁷ Pa portent respectivement la référence 144.1, 144.2, 144.3, 144.4 et 144.5. Le segment de droite reliant lesdits points 144.1 à 144.5 portent les références 146 et correspond au comportement possible d'un système de freinage selon la présente invention le choix judicieux des points 144.i (144.1, 144.2, ..., 144.5) permet, si cela est désiré, d'obtenir un comportement du système de freinage qui serait impossible à réaliser avec un quelconque dispositif de type connu. On peut augmenter et/ou diminuer un rapport d'assistance, linéairement ou non, décrire une courbe tel qu'un arc de cercle, type sinusoïde, une hyperbole ou autre.

En outre, il est possible de réduire le prix du servomoteur selon la présente invention en tolérant en production industrielle une plus grande dispersion des sauts géométriques tout en assurant la compensation de cette distribution par une correction effectuée par le moteur 4 et/ou l'actuateur 72. De même, selon la présente invention, il est possible en mettent en œuvre l'actionneur, sur une commande 100 du calculateur 5, de réduire la tolérance des sauts possibles à réaliser en fabrication. De même, il est possible lors de la mise au point d'un système de freinage d'effectuer des essais des diverses sensations pédales (pedal feel en terminologie anglo saxonne) sans modification du dispositif, uniquement en changeant les caractéristiques de la boucle d'asservissement du moteur 4 et/ou de l'actionneur 72. Ces avantages peuvent être ajoutés et/ou combinés aux avantages déjà précités, à savoir possibilité de réaliser un saut variable, de faire varier le rapport d'assistance, d'obtenir des rapports d'assistance doubles ou multiples, d'avoir des rapports d'assistance variables non linéairement avec la force, d'effectuer une assistance au freinage d'urgence, une compensation du freinage en fonction de la charge du véhicule, de prendre en compte des multiples éléments de freinage (freinage hydraulique plus freinage régénératif) avec une décélération correspondant à la consigne de freinage (force F exercée sur la pédale 1) indépendamment des apports respectifs du freinage hydraulique et régénératif et/où la modification de sensation pédale, notamment l'effacement de la pédale dure pendant les modes de freinage actif tels que ceux générés par les dispositifs de confort de freinage automatique par exemple de type ACC.

Avantageusement, le calculateur 5 peut estimer le type de sensation pédale désiré par le ou les conducteurs et adapter la sensation pédale à la sensation pédale désirée.

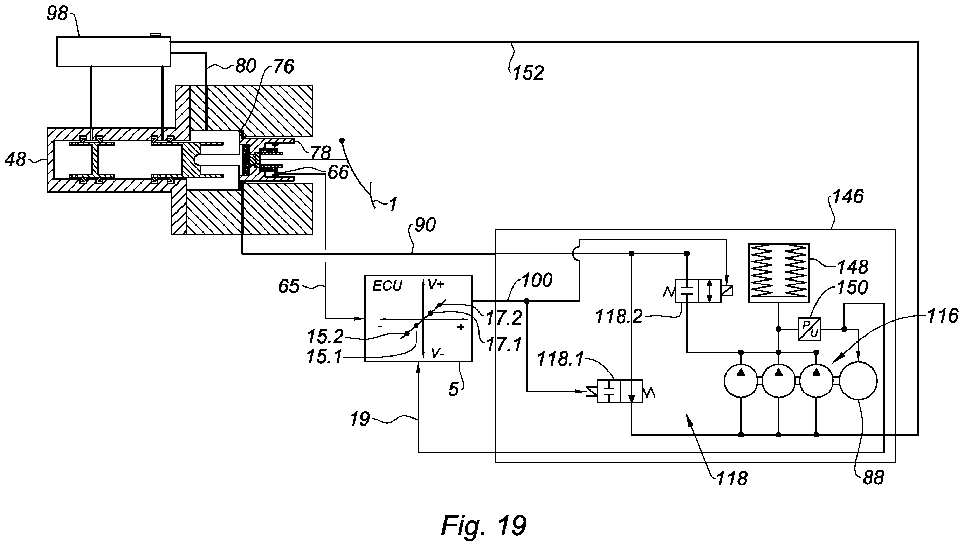

Sur la figure 19, on peut voir un exemple de réalisation d'un servomoteur selon la présente invention comportant une unité hydraulique 146 comprenant une pompe 116 et un circuit de commande hydraulique 118 comportant par exemple une première électrovalve 118.1 d'évacuation du fluide de la chambre de poussée 76 et une deuxième électrovalve 118.2 d'alimentation en liquide hydraulique sous pression de ladite chambre de poussée 76. Avantageusement, les valves 118.1 et 118.2 sont des valves travaillant en tout ou rien étant commandables soit en continu, soit, avantageusement, en commandant la largeur d'impulsion (PWM en terminologie anglo saxonne).

Avantageusement, la sortie de haute pression de la pompe 116 est reliée à un accumulateur 148 permettant d'arrêter la pompe 116 lorsque son fonctionnement n'est pas nécessaire. Avantageusement, un capteur de pression 150 mesure la pression disponible en sortie de la pompe 116 / de l'accumulateur 148. Avantageusement, le capteur de pression 150 est relié à un dispositif de commande d'un moteur de la pompe 116 ainsi que par une liaison 19 au calculateur 5. Il est bien entendu que la mise en œuvre d'autres capteurs de pression, par exemple au niveau du circuit primaire et secondaire de freinage relié au calculateur 5 et permettant une commande en pression, ne sort pas du cadre de la présente invention.

Dans l'exemple illustré sur la figure 19, la canalisation 80 est reliée au réservoir 98 de manière à remplir, à la pression atmosphérique, la chambre intermédiaire entre la chambre 76 et la chambre primaire du maître cylindre. Ainsi, les divers éléments d'étanchéité, typiquement les coupelles sont baignées sur leurs deux faces opposées par du liquide de frein.

Le dispositif de la figure 19 fonctionne sensiblement d'une manière analogue au dispositif de la figure 8.

Toutefois, la mise en œuvre de l'unité hermétique 146, déjà disponible au niveau d'un dispositif de contrôle de trajectoire (ESP) sur un véhicule moderne permet d'implémenter le dispositif selon la présente invention avec un surcoût modéré.

Dans l'exemple préféré illustré, l'entrée basse pression de la pompe 116 est reliée par une canalisation 152 au réservoir 98. Chacune des chambres du maître cylindre tandem 48 étant reliée audit réservoir 98 par une canalisation.

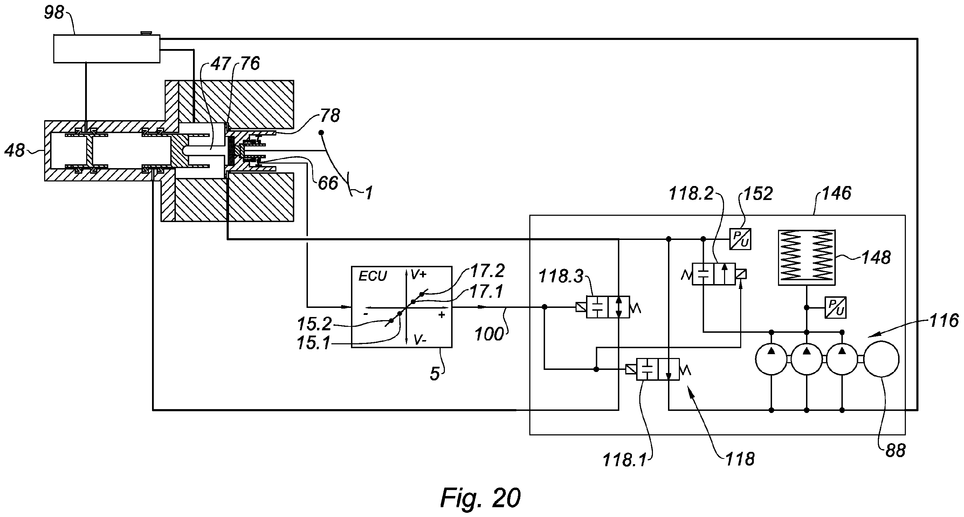

Sur la figure 20, on peut voir une variante de réalisation du dispositif selon la présente invention de la figure 19 dans lequel le circuit de commande hydraulique 118 comporte en outre une troisième électrovalve 118.3 reliant, sur commande, une source de pression, directement ou indirectement à la chambre primaire du maître cylindre 48.

Lors d'une variation de la position de la pédale de frein 1, correspondant à une variation de la consigne de freinage, par exemple une application de freinage, une augmentation du freinage, une diminution du freinage, ou un arrêt de freinage, le capteur 66 délivre un signal correspondant 65 au calculateur 5. Le calculateur 5 élabore une consigne de variation de l'assistance au freinage. Lorsqu'il s'agit d'une augmentation de freinage, l'électrovanne 118.2 est ouverte jusqu'à ce que la pression régnant dans la chambre de poussée 76 déplace le piston hydraulique 78 jusqu'à ce que le capteur 66 délivre un signal 65 correspondant au décalage désirée entre le premier et le deuxième équipages mobiles. Lorsque cette valeur est atteinte, la valve 118.2 assure l'isolation hermétique de l'étage haute pression de l'unité hydraulique 146. Lors de l'alimentation en liquide de frein sous pression de la chambre de poussée 76, la valve 118.1 reliée à l'étage basse pression de l'unité hydraulique 146 est fermée.

Lors d'un freinage à niveau constant, les deux valves 118.1 et 118.2 sont fermées. Ainsi, un freinage constant ne consomme pas de liquide de frein haute pression.

Pour un défreinage, le calculateur 5 assure la fermeture de la valve 118.2 et l'ouverture de la valve 118.1 jusqu'à ce que la pression dans la chambre de poussée 76 assure un décalage entre les premier et second équipages mobiles correspondant à la valeur de consigné désirée.

En absence de freinage, l'électrovalve 118.1 est ouverte de manière à assurer que la pression atmosphérique règne dans la chambre de poussée 76 alors que l'électrovanne 118.2 est fermée.

En outre, il est avantageux de ne pas relier la chambre primaire du maître cylindre 48 au réservoir 98, la réalimentation étant assurée par l'intermédiaire de l'électrovanne 118.3. Ainsi, (contrairement à l'exemple illustré, il est possible de supprimer la coupelle et les trous de réalimentation du piston primaire du maître cylindre 48.

Avantageusement, l'unité hydraulique 146 comporte en outre un deuxième capteur de pression 152 mesurant la pression délivrée à la chambre de poussée 76.

Avantageusement, comme dans les cas précédents, la section efficace de la chambre de poussée 76 est égale à la section efficace du piston primaire et/ou du piston secondaire du maître cylindre 48. Dans l'exemple avantageusement illustré, la valve 118.3 relie, sur commande 100 l'étage haute pression de l'unité hydraulique 146 à la chambre primaire du maître cylindre 48.

L'ouverture de la valve 118.3, sur commande 100 du calculateur 5 assure le préremplissage et/ou le remplissage de la chambre primaire du maître cylindre 48 permettant le fonctionnement des modes actifs, c'est-à-dire sans nécessiter l'appui sur la pédale 1 du système de freinage, par exemple pour un freinage automatique sur commande d'un radar (ACC), un freinage de parking ou autre.

L'augmentation de la pression dans la chambre primaire du maître cylindre 48 pousse le piston secondaire qui à son tour assure la montée en pression dans le circuit secondaire.

Il est à noter que l'égalité ou la quasi égalité des sections efficaces du piston primaire et de la chambre de poussée 76 permet d'alimenter en liquide de frein haute pression des freins sans enfoncement de la pédale 1 sans avoir besoin de recourir à un simulateur (contrairement au cas illustré sur la figure 16). De plus, l'absence de liaison entre la chambre primaire du maître cylindre 48 et le réservoir 98 permet avec une unique valve 118.3 (sans avoir besoin d'une valve 103) d'assurer le mode actif et/ou le préremplissage des freins.

Il est bien entendu que les divers éléments illustrés sur les diverses figures du présent brevet peuvent être combinés sans sortir du cadre de la présente invention.

L'invention s'applique notamment à l'industrie automobile.

L'invention s'applique principalement à l'industrie du freinage.
(2) Enveloppe
(12) bague (annulaire)
(3) tablier
(4) moteur électrique rotatif
(8) rotor
(7) premier jeu de roulement à billes
(9) deuxième jeu de roulement à billes
(10) ensemble vis écrou
(12) bague annulaire
(14) premier filetage
(16) deuxième filetage
(18) des billes
(20) piston d'assistance
(22) queue de piston
(24) embase
(26) face arrière
(28) face avant transversale (de la bague annulaire 12)
(30) passage longitudinal
(32) un plongeur
(34) première extrémité arrière (d'un plongeur)
(35) première extrémité avant (d'une tige de commande)
(36) une tige de commande
(37) plongeur
(38) première face (d'un disque de réaction)
(40) disque de réaction
(42) logement
(44) deuxième face (d'un disque de réaction)
(46) première extrémité arrière (d'une tige de poussée)
(47) tige de poussée
(48) maître cylindre
(49) piston
(50) deuxième extrémité avant (du piston)
(52) moyen de (de fixation du plongeur)
(54) clé
(58') extrémités transversales de la clé
(60) épaulement (de l'extrémité arrière de l'épaulement)
(65) connecteur
(66) moyens de détection
(68) moyen élastique
(70) capteur d'effort
(72) actionneur
(76) chambre de poussée
(78) piston hydraulique
(80) canalisation
(82) Maître cylindre d'alimentation de la chambre de poussée
(84) Chambre
(86) Piston
(88) Moteur
(100) Commande
(90) Canalisation
(92) Joint
(94) Electrovalve
(96) Canalisation
(98) Réservoir
(102) Electrovalve
(104) Simulateur
(106) Chambre avant
(108) Chambre arrière
(110) Actionneur
(112) Servomoteur pneumatique
(114) Electrovalve
(116) Pompe 118 circuit hydraulique
(120) Aimant
(122) Détecteur de champ magnétique
(128) Rondelle élastique
(130) Gauge de contrainte
(132) Courbe P = f(F)
(134) Jeu fonctionnel
(136) Segment avant saturation
(138) courbe γ = f (F)
(140) Saturation en décélération
(142) Points
(144) Courbe
F = force
P = Pression
S = Saut géométrique
Sp = saut en pression
Sγ = Saut en décélération

## Revendications

1. Dispositif de commande de freinage d'un véhicule automobile comportant :
- un premier équipage mobile comprenant une pièce (32, 37) susceptible d'être entraînée par l'organe d'actionnement du freinage par le conducteur, typiquement une pédale de frein (1) ;
- un second équipage mobile comprenant un actionneur (4, 72, 76) d'assistance de freinage entraînant un élément d'application d'effort (47, 78),
- un capteur (66) de position relative desdits premier et second équipages mobiles,
- un processeur (5) élaborant les consignes (100) de commande de l'actionneur d'assistance de freinage, **caractérisé en ce que** le processeur (5) élabore des consignes (100) de commande de l'actionneur (4, 72, 76) de manière à générer un **saut (S, Sp) et un** décalage non nul entre la position d'équilibre desdits premier et second équipages mobiles,
et **en ce que** le processeur (5) élabore des consignes de commande de l'actionneur (4, 72, 76) de manière à faire varier ledit décalage entre la position d'équilibre desdits premier et second équipages mobiles.

2. Dispositif selon les revendications 1 **caractérisé en ce qu'**il comporte en outre, un dispositif de réaction (40) exerçant un effort de réaction sur ledit premier équipage mobile et **en ce que** la position d'équilibre à laquelle le décalage entre lesdits premier et second équipages mobiles est détectée par le capteur (66), est une position d'équilibre d'effort de réaction sur ledit premier équipage mobile.

3. Dispositif selon la revendication 1 ou 2 **caractérisé en ce que** ledit décalage augmente le saut (S) par rapport au saut à la position sans décalage de la pièce (32, 37) susceptible d'être entraînée par l'organe d'actionnement par le conducteur et l'élément (47, 78) d'application d'effort.

4. Dispositif selon l'une quelconque des revendications précédentes **caractérisé en ce que** l'actionneur (72) comporte un moteur électrique (4, 88).

5. Dispositif selon l'une quelconque des revendications précédentes **caractérisé en ce qu'**il comporte un piston (78) d'assistance entraîné par la pression d'un liquide hydraulique régnant dans une chambre de poussée (76).

6. Dispositif selon les revendications 4 et 5 **caractérisé en ce qu'**il comporte :
- un générateur de pression (82) du liquide hydraulique, comprenant une chambre annulaire (84) à volume variable et un piston annulaire entraîné, sur commande, par ledit moteur électrique (4, 88) ; et
- des moyens de connexion (90) de la sortie de la chambre annulaire (84) à volume variable à la chambre de poussée (76).

7. Dispositif selon les revendications 5 ou 6 **caractérisé en ce qu'**il comporte en outre des moyens (94), pour relier, sur commande, des moyens de génération de pression d'un liquide hydraulique à une chambre d'un maître-cylindre.

8. Dispositif selon la revendication 5, 6 ou 7 **caractérisé en ce qu'**il comporte, en outre, des moyens (102) d'isolation hermétique, sur commande, de la chambre (84) à volume variable et de la chambre de poussée (76).

9. Dispositif selon les revendications 5, 6, 7 ou 8 **caractérisé en ce qu'**il comporte en outre des moyens (103) d'isolation hermétique, sur commande, d'une chambre du maître cylindre (48) et du réservoir (38) de liquide de frein.

10. Dispositif selon l'une quelconque des revendications 1 à 9 **caractérisé en ce que** le processeur (5) est susceptible d'élaborer des consignes de l'actionneur (4, 72, 76) de manière à faire varier, en cours de freinage, ledit décalage entre la position d'équilibre d'effort de réaction sur ladite pièce (32, 37) susceptible d'être entraîné par l'organe d'actionnement et la position de l'élément (47, 78) d'application d'effort de l'actionneur (4, 78).

11. Procédé de fabrication d'un dispositif de commande de freinage d'un véhicule automobile comportant :
- une étape de fabrication des pièces mécaniques et/ou hydrauliques dudit dispositif ;
- une étape d'assemblage des pièces fabriquées ;
**caractérisé en ce qu'**il comporte en outre une étape de programmation d'un processeur (5) pour lui permettre d'élaborer des consignes (100) de commande d'un actionneur (4, 72, 76) de manière à faire varier un décalage entre une position d'équilibre d'effort de réaction sur une pièce (32, 37) susceptible d'être entraîné par l'organe d'actionnement par le conducteur et la position de l'élément (47, 78) d'application d'effort de l'actionneur (4, 78).

## Patentansprüche

1. Bremssteuerungsvorrichtung für ein Kraftfahrzeug, aufweisend:
- eine erste bewegliche Anordnung, die ein Teil (32, 37) umfasst, das geeignet ist, vom Organ zur Betätigung der Bremse durch den Fahrer, typischerweise einem Bremspedal (1), angetrieben zu werden;
- eine zweite bewegliche Anordnung, die einen Bremsunterstützungsaktuator (4, 72, 76) umfasst, der ein Kraftaufbringelement (47, 78) antreibt,
- einen Sensor (66) für die relative Position der ersten und zweiten beweglichen Anordnungen,
- einen Prozessor (5), der die Steuerungssollwerte (100) des Bremsunterstützungsaktuators verarbeitet, **dadurch gekennzeichnet, dass** der Prozessor (5) Steuerungssollwerte (100) des Aktuators (4, 72, 76) so verarbeitet, dass ein **Sprung (S, Sp) und eine** Verschiebung ungleich null zwischen der Gleichgewichtsposition der ersten und zweiten beweglichen Anordnungen erzeugt werden,
und dass der Prozessor (5) Steuerungssollwerte des Aktuators (4, 72, 76) so verarbeitet, dass die Verschiebung zwischen der Gleichgewichtsposition der ersten und der zweiten beweglichen Anordnungen variiert.

2. Vorrichtung nach Anspruch 1, **dadurch gekennzeichnet, dass** sie ferner eine Reaktionsvorrichtung (40) aufweist, die eine Reaktionskraft auf die erste bewegliche Anordnung ausübt, und dass die Gleichgewichtsposition, bei der die Verschiebung zwischen den ersten und zweiten beweglichen Anordnungen von dem Sensor (66) detektiert wird, eine Reaktionskraftgleichgewichtsposition an der ersten beweglichen Anordnung ist.

3. Vorrichtung nach Anspruch 1 oder 2, **dadurch gekennzeichnet, dass** die Verschiebung den Sprung (S) in Bezug auf den Sprung in der Position ohne Verschiebung des Teils (32, 37), das geeignet ist, durch das Organ zur Betätigung durch den Fahrer angetrieben zu werden, und des Kraftaufbringelements (47, 78) erhöht.

4. Vorrichtung nach einem der vorhergehenden Ansprüche, **dadurch gekennzeichnet, dass** der Aktuator (72) einen Elektromotor (4, 88) aufweist.

5. Vorrichtung nach einem der vorhergehenden Ansprüche, **dadurch gekennzeichnet, dass** sie einen Unterstützungskolben (78) aufweist, der durch den in einer Schubkammer (76) herrschenden Druck einer Hydraulikflüssigkeit angetrieben wird.

6. Vorrichtung nach den Ansprüchen 4 und 5, **dadurch gekennzeichnet, dass** sie aufweist:
- einen Druckerzeuger (82) für die Hydraulikflüssigkeit, umfassend eine Ringkammer (84) mit variablem Volumen und einen Ringkolben, der auf Ansteuerung von dem Elektromotor (4, 88) angetrieben wird; und
- Mittel zum Verbinden (90) des Ausgangs der Ringkammer (84) mit variablem Volumen mit der Schubkammer (76).

7. Vorrichtung nach einem der Ansprüche 5 oder 6, **dadurch gekennzeichnet, dass** sie ferner Einrichtungen (94) aufweist, um auf Ansteuerung Druckerzeugungseinrichtungen für eine Hydraulikflüssigkeit mit einer Kammer eines Hauptzylinders zu verbinden.

8. Vorrichtung nach Anspruch 5, 6 oder 7, **dadurch gekennzeichnet, dass** sie ferner Einrichtungen (102) zur hermetischen Absperrung, auf Ansteuerung, der Kammer (84) mit variablem Volumen und der Schubkammer (76) aufweist.

9. Vorrichtung nach den Ansprüchen 5, 6, 7 oder 8, **dadurch gekennzeichnet, dass** sie ferner Einrichtungen (103) zur hermetischen Absperrung, auf Ansteuerung, einer Kammer des Hauptzylinders (48) und des Bremsflüssigkeitsbehälters (38) aufweist.

10. Vorrichtung nach einem der Ansprüche 1 bis 9, **dadurch gekennzeichnet, dass** der Prozessor (5) geeignet ist, Sollwerte des Aktuators (4, 72, 76) so zu verarbeiten, dass während des Bremsens die Verschiebung zwischen der Reaktionskraftgleichgewichtsposition an dem Teil (32, 37), das geeignet ist, von dem Betätigungsorgan angetrieben zu werden, und der Position des Kraftaufbringelements (47, 78) des Aktors (4, 78) variiert.

11. Verfahren zur Herstellung einer Bremssteuerungsvorrichtung für ein Kraftfahrzeug, aufweisend:
- einen Schritt der Herstellung der mechanischen und/oder hydraulischen Teile der Vorrichtung;
- einen Schritt des Montierens der hergestellten Teile;
**dadurch gekennzeichnet, dass** es einen Schritt des Programmierens eines Prozessors (5) umfasst, um ihm zu ermöglichen, Steuerungssollwerte (100) eines Aktuators (4, 72, 76) so zu verarbeiten, dass eine Verschiebung zwischen einer Reaktionskraftgleichgewichtsposition an einem Teil (32, 37), das geeignet ist, von dem Organ zur Betätigung durch den Fahrer angetrieben zu werden, und der Position des Kraftaufbringelements (47, 78) des Aktuators (4, 78) variiert.

## Claims

1. Device for controlling the braking of a motor vehicle comprising:
- a first mobile assembly, comprising a part (32, 37) that can be driven by the braking actuation member by the driver, typically a brake pedal (1);
- a second mobile assembly, comprising a braking assistance actuator (4, 72, 76) driving a force application element (47, 78),
- a relative position sensor (66) for said first and second mobile assemblies,
- a processor (5) generating the control set points (100) for the braking assistance actuator, **characterized in that** the processor (5) generates control set points (100) for the actuator (4, 72, 76) so as to generate a jump (S, Sp) and a non-zero offset between the balance position of said first and second mobile assemblies,
and **in that** the processor (5) generates control set points for the actuator (4, 72, 76) so as to vary said offset between the balance position of said first and second mobile assemblies.

2. Device according to Claim 1, **characterized in that** it also comprises a reaction device (40) exerting a reaction force on said first mobile assembly and **in that** the balance position at which the offset between said first and second mobile assemblies is detected by the sensor (66) is a balance position of reaction force on said first mobile assembly.

3. Device according to Claim 1 or 2, **characterized in that** said offset increases the jump (S) relative to the jump to the zero-offset position of the part (32, 37) that can be driven by the actuating member by the driver and the force application element (47, 78).

4. Device according to any one of the preceding claims, **characterized in that** the actuator (72) comprises an electric motor (4, 88).

5. Device according to any one of the preceding claims, **characterized in that** it comprises an assistance piston (78) driven by the pressure of a hydraulic liquid prevailing in a thrust chamber (76).

6. Device according to Claims 4 and 5, **characterized in that** it comprises:
- a pressure generator (82) for the hydraulic liquid, comprising an annular chamber (84) with variable volume and an annular piston driven, on command, by said electric motor (4, 88); and
- connection means (90) for connecting the output of the annular chamber (84) with variable volume at the thrust chamber (76).

7. Device according to Claim 5 or 6, **characterized in that** it also comprises means (94), for linking, on command, hydraulic liquid pressure generating means to a chamber of a master cylinder.

8. Device according to Claim 5, 6 or 7, **characterized in that** it also comprises means (102) for hermetically insulating, on command, the chamber (84) with variable volume and the thrust chamber (76).

9. Device according to Claim 5, 6, 7 or 8, **characterized in that** it also comprises means (103) for hermetically insulating, on command, a chamber of the master cylinder (48) and the brake liquid tank (38).

10. Device according to any one of Claims 1 to 9, **characterized in that** the processor (5) can generate set points for the actuator (4, 72, 76) so as to vary, during braking, said offset between the balance position of reaction force on said part (32, 37) that can be driven by the actuating member and the position of the force application element (47, 78) of the actuator (4, 78).

11. Method for manufacturing a braking control device for a motor vehicle, comprising:
- a step of manufacturing the mechanical and/or hydraulic parts of said device;
- a step of assembling the manufactured parts;
**characterized in that** it also comprises a step of programming a processor (5) to enable it to generate control set points (100) for an actuator (4, 72, 76) so as to vary an offset between a balance position of reaction force on a part (32, 37) that can be driven by the actuating member by the driver and the position of the force application element (47, 78) of the actuator (4, 78).
